# DEMANDE DE BREVET EUROPEEN

(11) **EP 2 243 531 A1**
(43) Date de publication de la demande: **27.10.2010**
(21) Numéro de dépôt: 10290195.6
(22) Date de dépôt: 12.04.2010
(51) Int. Cl.: B01D 17/02

(54) **Dispositif pour la séparation et la récupération des graisses et des matières solides des eaux usées**

(30) Priorité: 23.04.2009 FR 0901971
(71) Demandeur: Longo, Edgard, 34400 Lunel Viel (FR)
(72) Inventeur: Longo, Edgard, 34400 Lunel Viel (FR)
(74) Mandataire: Gosse, Michel

(57) **Abrégé**

L'invention concerne un dispositif destiné à séparer et à récupérer les matières solides, les graisses lourdes et les huiles flottantes contenues dans les eaux usées.

Le dispositif selon l'invention se **caractérise en ce que** lesdites fonctions sont réalisées par la superposition coopérative des moyens suivants :
- un du bac général (5) dont le fond est constitué d'une paroi inclinée (51) ;
**-** un moyen (2.21), apte à récupérer et à entraîner les huiles flottantes et les graisses lourdes, constitué d'un tapis élévateur (2) parallèle au fond (51) dudit bac et d'un rouleau à gorges (21) ;
- un panier dégrilleur (1) constitué d'un réceptacle à parois ajourées apte à retenir les matières solides et dont le fond est parallèle audit tapis élévateur (2) de manière à laisser passer les graisses lourdes et les huiles flottantes qui sont directement reprises par celui-ci.

## Description

### DOMAINE DE L'INVENTION

La présente Invention concerne le domaine des dispositifs pourvus de moyens destinés à la séparation et la récupération des matières solides, des graisses lourdes et des huiles flottantes contenues dans les eaux usées, de restauration, de manière à rejeter vers les égouts une eau débarrassée desdites matières.

### ARRIERE PLAN TECHNOLOGIQUE

Les dispositifs connus destinés à séparer et à récupérer les graisses, comportent généralement :
- un panier dégrilleur, ou grille, amovible, recevant directement les eaux usées, apte à retenir les matières solides, à laisser passer les graisses lourdes et les huiles flottantes, régulièrement vidé de son contenu qui est généralement évacué par le circuit traditionnel destiné aux déchets solides ;
- un moyen apte à entraîner les huiles flottantes et les graisses lourdes vers un bac de récupération amovible qui est également régulièrement vidé de son contenu qui peut être récupéré par des entreprises de recyclage ;
- un conduit apte à récupérer les eaux débarrassées des matières solides, des huiles flottantes et des graisses lourdes, qui sont généralement évacuées par le réseau public d'égouts ;
- un bac général, étanche, apte à contenir les divers sous-ensembles énumérés ci-avant.

Ils sont généralement installés à la source de production des eaux grasses.

Ils présentent les principaux inconvénients suivants qui sont liés à la conception même de leurs divers sous-ensembles :
- le panier dégrilleur, placé à l'entrée de l'appareil, n'occupe qu'une faible partie du volume du bac général et de ce fait doit être vidé régulièrement; en outre, l'accroissement de sa capacité augmenterait l'encombrement de l'appareil et son coût, ou se ferait au détriment de la réserve d'effluent, ce qui n'est pas le but recherché ;
- les graisses lourdes doivent être chauffées pour les rendre récupérables par le moyen de séparation et d'entraînement qui se présente généralement sous la forme d'un disque rotatif ;
- le disque rotatif offre une faible surface de contact avec l'effluent et de ce fait possède un rendement très faible quant à la récupération des huiles flottantes et des graisses lourdes chauffées ;
- le bac de récupération des huiles et des graisses est placé à l'extérieur de l'appareil et de ce fait peut être facilement renversé et surtout dégage des odeurs désagréables. L'état de la technique général semble être contenu dans les documents DE3712719 et US4238333. Les dispositifs qui y sont décrits s'appliquent à des installations industrielles et non à des restaurants traditionnels qui nécessitent un appareil de petite taille présentant des caractéristiques fonctionnelles et conceptuelles particulières, comme par exemple :
- le panier dégrilleur amovible apte à retenir les matières solides ;
- le moyen apte à entraîner et à évacuer, simultanément, vers un bac amovible, les graisses lourdes et les huiles flottantes ;
- le conduit apte à récupérer les eaux débarrassées des matières solides, des huiles flottantes et des graisses lourdes ;
   qui ne sont pas enseignées dans lesdits documents et dont les buts poursuivis, les moyens mis en oeuvre et les résultats obtenus sont différents.

### RESUME DE L'INVENTION

L'invention vise à réaliser un dispositif du genre en question présentant des caractéristiques nouvelles et originales et dont le but principal est de diminuer, voire supprimer, les Inconvénients susmentionnés.

A cet effet, le dispositif selon l'invention se **caractérise en ce que** les moyens destinés à la séparation et la récupération des matières solides, des graisses lourdes et des huiles flottantes contenues dans les eaux usées, sont constitués, en superposition coopérative :
- d'un bac général étanche dont le fond est constitué d'une paroi inclinée qui s'étend du point le plus bas dudit bac à un point situé au dessus du niveau d'effluent le plus haut ;
- d'un tapis élévateur, apte à récupérer et à entraîner les huiles flottantes et les graisses lourdes vers un bac de récupération amovible, disposé au dessus de la paroi inclinée du bac général, parallèlement, à proximité et s'étendant sur toute la longueur de celle-ci, et d'un rouleau à gorges, entraîné par ledit tapis, destiné à récupérer les graisses flottantes et à les transférer sur ce dernier ;
- d'un panier dégrilleur, amovible, recevant directement les eaux usées, apte à retenir les matières solides et à laisser passer les graisses lourdes et les huiles flottantes, constitué d'un réceptacle à parois ajourées dont le fond incliné est disposé au dessus du tapis élévateur, parallèlement et à proximité de celui-ci, de manière à évacuer les graisses lourdes et les huiles flottantes qui sont reprises directement par ledit tapis élévateur ;
- d'un conduit apte à récupérer les eaux débarrassées des matières solides, des huiles flottantes et des graisses lourdes et à les rejeter dans les égouts.

Il se caractérise également en ce que :
- le tapis élévateur occupe la quasi largeur et longueur du bac général ;
- le panier dégrilleur occupe la quasi largeur et longueur du tapis élévateur.

Dans le dispositif ainsi réalisé :
a) le panier dégrilleur :
   - occupe une grande partie du volume des effluents et de ce fait possède une grande capacité de stockage des matières solides qui sont évacuées régulièrement grâce à l'aspect amovible de celui-ci ;
   - possède un fond incliné proche de la surface du tapis élévateur permettant un transfert direct sur celui-ci des huiles flottantes et des graisses lourdes sans qu'il soit nécessaire de les chauffer ou de les pulser puisque le fond du réceptacle est parallèle audit tapis et dans son voisinage immédiat
b) le tapis élévateur est lisse pour éviter de remonter l'eau et le rouleau à gorges sert à récupérer les graisses flottantes et à les transférer sur ledit tapis ; en outre il opère sur toute la largeur et la longueur de panier dégrilleur lui conférant ainsi un rendement élevé ; de plus les graisses lourdes sont récupérées en même temps que les huiles flottantes, avec le même moyen, sans nécessiter la moindre source de chaleur ou d'air pulsé ;
c) le bac général peut comporter une extension apte à loger le bac de récupération des huiles flottantes et des graisses lourdes et un couvercle étanche apte à recouvrir ledit bac général et son extension de manière à obtenir un dispositif est hygiénique et sans odeur du fait de l'étanchéité totale de l'ensemble de ses composants.

Selon d'autres modes particuliers de réalisation de invention :
- le bac général peut comporter un flotteur associé à un interrupteur apte à commander un relais, temporisé, alimentant un motoréducteur destiné à entraîner le tambour supérieur du tapis élévateur en fonction des variations de niveau de l'effluant ;
- le bac de récupération des huiles flottantes et des graisses lourdes peut comporter un flotteur associé à un interrupteur apte à commander une alarme lorsque ledit bac est plein.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

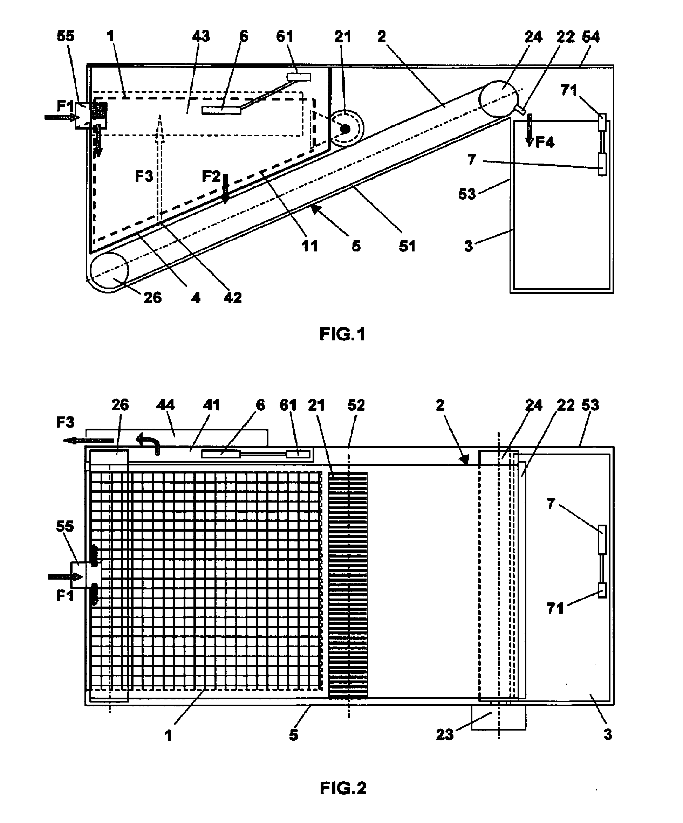

- la figure 1 est une vue en coupe transversale du dispositif selon l'invention ;
- la figure 2 est une vue de dessus intérieure du dispositif selon la figure 1.

### DESCRIPTION DETAILLEE DE L'INVENTION

Le dispositif représenté est pourvu de moyens destinés à la séparation et la récupération des matières solides, des graisses lourdes et des huiles flottantes contenues dans les eaux usées, de restauration, de manière à rejeter vers les égouts une eau débarrassée desdites matières.

Lesdits moyens sont constitués, en superposition coopérative :
- d'un bac général (5) étanche dont le fond est constitué d'une paroi inclinée (51) qui s'étend du point le plus bas dudit bac à un point situé au dessus du niveau d'effluent le plus haut ;
- d'un tapis élévateur (2), apte à récupérer et à entraîner, simultanément, les huiles flottantes et les graisses lourdes vers un bac de récupération amovible (3), disposé au dessus de la paroi inclinée (51) du bac général (5), parallèlement, à proximité et s'étendant sur toute la longueur de celle-ci, et d'un rouleau à gorges (21), entraîné par ledit tapis, destiné à récupérer les graisses flottantes et à les transférer sur ce dernier ;
- d'un panier dégrilleur (1), amovible, recevant directement les eaux usées, apte à retenir les matières solides et à laisser passer les graisses lourdes et les huiles flottantes, constitué d'un réceptacle à parois ajourées dont le fond incliné (11) est disposé au dessus du tapis élévateur (2), parallèlement et à proximité de celui-ci, de manière à évacuer les graisses lourdes et les huiles flottantes qui sont reprises directement par ledit tapis élévateur ;
- d'un conduit (41) apte à récupérer les eaux débarrassées des matières solides, des huiles flottantes et des graisses lourdes et à les rejeter dans les égouts.

Selon des particularités de réalisation de l'invention
- le tapis élévateur (2) occupe la quasi largeur et longueur du bac général (5) ;
- le panier dégrilleur (1) occupe la quasi largeur et longueur du tapis élévateur (2) et une partie importante du volume du bac général.

Selon des caractéristiques additionnelles de l'invention :
- le conduit (41), est agencé contre la paroi latérale (52) du bac général (5) et est pourvu d'une ouverture de récupération basse (42) et d'une ouverture d'évacuation haute (43) des eaux débarrassées des matières solides, des huiles flottantes et des graisses lourdes, qui débouche dans un conduit d'évacuation (44) ;
- le bac général (5) comporte une extension (53) apte à loger le bac amovible (3) de récupération des huiles flottantes et des graisses lourdes ;
- ledit bac général et son extension sont recouverts par un couvercle étanche (54) ;
- le bac amovible (3) de récupération des huiles flottantes et des graisses lourdes est placé sous l'extrémité supérieure du tapis élévateur (2) qui comporte un racleur (22) apte à récupérer lesdites huiles et graisses ;
- le bac général (5) comporte un flotteur (6) associé à un interrupteur (61) apte à commander un relais, temporisé, alimentant un motoréducteur (23) destiné à entraîner le tambour supérieur (24) du tapis élévateur (2), en fonction des variations de niveau de l'effluent ;
- le bac amovible (3) de récupération des huiles flottantes et des graisses lourdes, comporte un flotteur (7) associé à un interrupteur (71) apte à commander une alarme lorsque ledit bac est plein.

Le bac principal comporte une buse (55) d'entrée des effluents qui est équipée d'un réducteur conique destiné à augmenter la pression afin d'éviter des obstructions de celle-ci. En outre, ladite buse comporte une sortie qui dirige le jet d'effluents vers la paroi verticale de panier (flèche F1) de manière à éviter une accumulation de matière à l'entrée de celui-ci (autonettoyage).

La bande du tapis élévateur (2) est tendue entre les tambours supérieur (24) et inférieur (26). Elle peut être en matière synthétique, souple, lisse voire légèrement rugueuse.

L'entrée de l'effluent est représentée par la flèche F1, le passage de l'eau et des huiles flottantes au travers du panier par la flèche F2, la récupération des eaux claires via la de la cloison siphoïde (4) par la flèche F3 et la récupération des huiles et des graisses par la flèche F4.

Bien que initialement conçu pour le secteur de la restauration, le dispositif selon l'invention pourra voir son application étendue à d'autres domaines et plus particulièrement à tout domaine où il faudra séparer des solides, des matières flottantes et des liquides contenus dans des effluents.

Bien entendu, l'homme de métier sera apte à réaliser l'invention telle que décrite et représentée en appliquant et en adaptant des moyens connus. Il pourra également prévoir d'autres variantes sans pour cela sortir du cadre de celle-ci qui est déterminé par la teneur des revendications.

## Revendications

1. Dispositif pourvu de moyens destinés à la séparation et la récupération des matières solides, des graisses lourdes et des huiles flottantes contenues dans les eaux usées, de restauration, de manière à rejeter vers les égouts une eau débarrassée desdites matières, **caractérisé en ce que** lesdits moyens sont constitués, en superposition coopérative :
- d'un bac général (5) étanche dont le fond est constitué d'une paroi inclinée (51) qui s'étend du point le plus bas dudit bac à un point situé au dessus du niveau d'effluent le plus haut ;
- d'un tapis élévateur (2), apte à récupérer et à entraîner, simultanément, les huiles flottantes et les graisses lourdes vers un bac de récupération amovible (3), disposé au dessus de la paroi inclinée (51) du bac général (5), parallèlement, à proximité et s'étendant sur toute la longueur de celle-ci, et d'un rouleau à gorges (21), entraîné par ledit tapis, destiné à récupérer les graisses flottantes et à les transférer sur ce dernier ;
- d'un panier dégrilleur (1), amovible, recevant directement les eaux usées, apte à retenir les matières solides et à laisser passer les graisses lourdes et les huiles flottantes, constitué d'un réceptacle à parois ajourées dont le fond incliné (11) est disposé au dessus du tapis élévateur (2), parallèlement et à proximité de celui-ci, de manière à évacuer les graisses lourdes et les huiles flottantes qui sont directement reprises par ledit tapis élévateur ;
- d'un conduit (41) apte à récupérer les eaux débarrassées des matières solides, des huiles flottantes et des graisses lourdes et à les rejeter dans les égouts.

2. Dispositif, selon la revendication 1, **caractérisé en ce que** le tapis élévateur (2) occupe la quasi largeur et longueur du bac général (5).

3. Dispositif, selon la revendication 1, **caractérisé en ce que** le panier dégrilleur (1) occupe la quasi largeur du tapis élévateur (2).

4. Dispositif, selon la revendication 1, **caractérisé en ce que** le conduit (41) est agencé contre la paroi latérale (52) du bac général (5) et est pourvu d'une ouverture de récupération basse (42) et d'une ouverture d'évacuation haute (43) des eaux débarrassées des matières solides, des huiles flottantes et des graisses lourdes, qui débouche dans un conduit d'évacuation (44).

5. Dispositif, selon la revendication 1, **caractérisé en ce que** le bac général (5) comporte une extension (53) apte à loger le bac amovible (3) de récupération des huiles flottantes et des graisses lourdes.

6. Dispositif, selon la revendication 5, **caractérisé en ce qu'**il comporte un couvercle étanche (54) qui recouvre le bac général (5) et son extension (53).

7. Dispositif, selon la revendication 1, **caractérisé en ce que** le bac amovible (3) de récupération des huiles flottantes et des graisses lourdes est placé sous l'extrémité supérieure du tapis élévateur (2) qui comporte un racleur (22) apte à récupérer lesdites huiles et graisses.

8. Dispositif, selon la revendication 1, **caractérisé en ce que** le bac général (5) comporte un flotteur (6) associé à un interrupteur (61) apte à commander un relais, temporisé, alimentant un motoréducteur (23) destiné à entraîner le tambour supérieur (24) du tapis élévateur (2), en fonction des variations de niveau de l'effluent.

9. Dispositif, selon la revendication 1, **caractérisé en ce que** le bac amovible (3) de récupération des huiles flottantes et des graisses lourdes, comporte un flotteur (7) associé à un interrupteur (71) apte à commander une alarme lorsque ledit bac est plein.
